# EUROPEAN PATENT SPECIFICATION

(11) **EP 0 801 111 B1**
(45) Date of publication and mention of the grant of the patent: **29.12.1999**
(21) Application number: 97105852.4
(22) Date of filing: 09.04.1997
(51) Int. Cl.: C08L 83/04, C08K 13/02

(54) **Heat-curable silicone rubber composition and method for the preparation thereof**
Hitzehärtbare Silikonkautschukmischung und Verfahren zu ihrer Herstellung
Composition de caoutchouc de silicone thermodurcissable et procédé de sa préparation

(30) Priority: 10.04.1996 JP 11319696
(43) Date of publication of application: 15.10.1997
(73) Proprietor: Dow Corning Toray Silicone Company, Limited, Tokyo 103 (JP)
(72) Inventor: Matsushita, Takao, Ichihara-shi, Chiba Prefecture (JP); Takuman, Osamu, Ichihara-shi, Chiba Prefecture (JP)
(74) Representative: Spott, Gottfried, Dr.

(56) References cited:
- EP-A- 0 553 840
- GB-A- 1 588 754
- US-A- 4 310 444
- PATENT ABSTRACTS OF JAPAN vol. 010, no. 235 (C-366), 14 August 1986 & JP 61 069865 A (TORAY SILICONE CO LTD), 10 April 1986,

## Description

This invention relates to a heat-curable silicone rubber composition that yields a strongly flame-retardant cured product that also has excellent electrical properties.

Silicone rubbers are widely used in a diverse variety of applications as a consequence of their excellent heat resistance, excellent resistance to aging, and excellent electrical properties. However, a drawback to silicone rubbers is their flammability, and in response to this numerous compositions have been proposed that provide self-extinguishing flame retardant silicone rubbers. For example, Japanese Patent Publication Kokoku 44-2591 (1969) teaches a composition made by blending a platinum compound, such as chloroplatinic acid or a platinum-olefin complex, into a silicone rubber base compound. However, the simple admixture of such platinum compounds provides only a small improvement in the flame retardancy. This fact has resulted in the proposal of numerous compositions that achieve additional improvements in the flame retardancy of the silicone rubber through the combination of a platinum compound and an inorganic filler. Compositions of this nature are exemplified by the composition disclosed in Japanese Patent Publication Kokoku 47-21826 (1972), in which a platinum compound and fumed titanium dioxide are blended into a silicone rubber base compound; the composition disclosed in Japanese Patent Publication Kokoku 51-23979 (1976), in which a platinum compound and manganese carbonate micropowder are blended into a silicone rubber base compound; and the composition disclosed in Japanese Patent Publication Kokoku 51-35501 (1976), in which a platinum compound and iron oxide powder are blended into a silicone rubber base compound.

Even these silicone rubber compositions do not exhibit a fully satisfactory flame retardancy. The composition containing a platinum compound and fumed titanium dioxide yields a silicone rubber whose electrical properties deteriorate in a humid atmosphere. The composition containing a platinum compound and manganese carbonate suffers from an inhibited vulcanization, and hence a failure to vulcanize thoroughly, when an acyl-type organoperoxide is used as its vulcanizing agent. The composition containing a platinum compound and iron oxide does not exhibit an improved flame retardancy in the absence of large additions of iron oxide, these large additions cause diminished mechanical strength properties in the resulting silicone rubber.

Other tactics known for achieving improvements in the flame retardancy of silicone rubber compositions consist of increasing the addition of the nonflammable inorganic filler and reducing the addition of the flammable polyorganosiloxane gum. The silicone rubber compositions afforded by these tactics have poor molding processability characteristics and their heat-curing affords silicone rubber moldings with reduced mechanical strength. These drawbacks place limitations on the applications of these compositions.

As a result of extensive investigations directed to solving the problems described above, the inventors discovered that the blending of special additive components into a specific heat-curable silicone rubber composition affords a cured silicone rubber with vastly improved flame retardancy and substantially improved electrical properties as typified by tracking resistance.

An object of the present invention is to provide a heat-curable silicone rubber composition that cures into a highly flame-retardant silicone rubber with excellent electrical properties and does so without sacrificing mechanical strength.

The heat-curable silicone rubber composition comprises (A) organopolysiloxane gum comprising at least 2 silicon-bonded alkenyl groups in each molecule and has average compositional formula RₐSiO_{(4-a)/2}, where R denotes substituted and unsubstituted monovalent hydrocarbon groups and a is a value from 1.95 to 2.05, (B) silica micropowder, (C) aluminum hydroxide powder, (D) benzotriazole, (E) the reaction mixture of (a) a platinum compound and (b) 3,5-dimethyl-1-hexyn-3-ol, and (F) organoperoxide. Also, a method for the *preparation* of said heat-curable silicone rubber composition is provided.

The present invention is a heat-curable silicone rubber composition comprising
(A) 100 weight parts polyorganosiloxane gum comprising at least 2 silicon-bonded alkenyl groups in each molecule and having average compositional formula

   RₐSiO_{(4-a)/2} ,

   where R denotes substituted and unsubstituted monovalent hydrocarbon groups and a is a value from 1.95 to 2.05,
(B) 10 to 100 weight parts silica micropowder,
(C) 1 to 50 weight parts aluminum hydroxide powder,
(D) 0.01 to 10 weight parts benzotriazole,
(E) the reaction mixture of (a) a platinum compound and (b) 3,5-dimethyl-1-hexyn-3-ol, where the reaction mixture is added in a quantity that provides from 1 to 1,000 weight parts platinum metal for each 1,000,000 weight parts of component (A), and
(F) 0.1 to 10 weight parts organoperoxide.

To explain the present invention in greater detail, the polyorganosiloxane gum (A) is the base component of the present composition and has the average compositional formula RₐSiO_{(4-a)/2}. In the formula for component (A), R denotes substituted and unsubstituted monovalent hydrocarbon groups and is exemplified by alkyl groups such as methyl, ethyl, and propyl; alkenyl groups such as vinyl, allyl, butenyl, and hexenyl; aryl groups such as phenyl; 3,3,3-trifluoropropyl; 2-phenylethyl; and 2-cyanoethyl. The subscript a is a value from 1.95 to 2.05. Component (A) comprises at least 2 silicon-bonded alkenyl groups in each molecule. The alkenyl groups can be bonded in pendant positions, at the terminal positions, or at both positions. The molecular structure of component (A) may be straight chain or partially branched straight chain. Component (A) generally has a degree of polymerization in the range of from 1,000 to 20,000. Component (A) can be a homopolymer or a copolymer or a mixture of such polymers. The siloxy units comprising component (A) are exemplified by dimethylsiloxy, vinylmethylsiloxy, methylphenylsiloxy, and (3,3,3-trifluoropropyl)methylsiloxy. The molecular terminal groups in component (A) are exemplified by trimethylsiloxy, silanol, vinyldimethylsiloxy, and vinylmethylhydroxysiloxy groups. The subject polyorganosiloxane gum is exemplified by vinyldimethylsiloxy-endblocked dimethylsiloxane-vinylmethylsiloxane copolymer gums, vinyldimethylsiloxy-endblocked polydimethylsiloxane gums, silanol-endblocked dimethylsiloxane-vinylmethylsiloxane copolymer gums, vinylmethylhydroxysiloxy-endblocked dimethylsiloxane-vinylmethylsiloxane copolymer gums, and vinyldimethylsiloxy-endblocked dimethylsiloxane-methylphenylsiloxane-vinylmethylsiloxane copolymer gums.

The silica micropowder used as component (B) in the present invention is a reinforcing or semi-reinforcing filler and is an essential component that imparts mechanical strength to the silicone rubber afforded by the cure of the present composition. This silica micropowder is exemplified by reinforcing silica micropowders such as dry-process silicas like fumed silica and by wet-process silicas like precipitated silica. Component (B) is also exemplified by semi-reinforcing silica micropowders such as quartz powder and diatomaceous earth. Component (B) is preferably silica micropowder with a particle size ≤50 µm and a specific surface area ≥ 50 m²/g. It is additionally preferred that the surface of the silica micropowder be hydrophobed by treatment with an organosilicon compound such as an organosilane, organosilazane, or organosiloxane oligomer. The addition of too little component (B) results in reduced mechanical strength of the cured composition and the addition of too much impairs blending into component (A). Therefore component (B) should be added at from 10 to 100 weight parts per 100 weight parts component (A). The addition of less than 10 weight parts component (B) results in reduced post-cure mechanical strength for the composition while the addition of more than 100 weight parts strongly impairs blending into component (A).

The aluminum hydroxide powder (C) functions to reduce the blending ratio of component (A) and thus to improve the flame retardancy. This aluminum hydroxide powder preferably has a particle size in the range from 0.1 to 50 µm and more preferably from 0.1 to 10 µm. Component (C) is added at from 1 to 50 weight parts per 100 weight parts component (A).

The benzotriazole (D) used does not exhibit an effect by itself but has a synergistic effect in combination with component (E) and functioning to provide a major increase in the flame retardancy of the present composition. Component (D) is added at from 0.01 to 10 weight parts and more preferably from 0.01 to 5 weight parts, per 100 weight parts component (A). A component (D) concentration below 0.01 weight part will not manifest a functional effect. Component (D) is poorly dispersible in the silicone rubber composition when used at more than 10 weight parts, and the use of such quantities causes a deterioration in the processability of the composition.

The component (E) used is a reaction mixture of (a) a platinum compound and (b) 3,5-dimethyl-1-hexyn-3-ol. Component (E) and its co-use with the benzotriazole (D) provides a major improvement in the flame retardancy of the present composition. This combination of component (E) and component (D) also provides a substantial improvement in electrical properties such as tracking resistance.

As used herein, the reaction mixture of a platinum compound and 3,5-dimethyl-1-hexyn-3-ol refers to the product afforded by the reaction of these two compounds as well as to mixtures in which this product is mixed with either or both of the precursors, that is the platinum compound and 3,5-dimethyl-1-hexyn-3-ol. The platinum compound (a) in component (E) is exemplified by chloroplatinic acid, the potassium and sodium salts of chloroplatinic acid, chloroplatinic acid-olefin complexes, chloroplatinic acid-alkenylsiloxane complexes, and the diketone complexes of platinum. Among the preceding, chloroplatinic acid and the platinum-alkenylsiloxane complex disclosed in Japanese Patent Publication Kokoku 42-22924 (1967) are particularly preferred. The 3,5-dimethyl-1-hexyn-3-ol used as component (b) is known as an inhibitor of the hydrosilylation reaction.

The weight ratio of component (a) to component (b) is preferably from 1:0.1 to 1:1000 and more preferably from 1:1 to 1:100. It is preferred that the number of moles of component (b) be greater than the number of moles of component (a). The reaction mixture can be prepared, for example, by mixing components (a) and (b) and shaking or stirring this mixture at ambient or elevated temperature and then allowing it to stand.

Component (E) is added to the present composition in a quantity that provides from 1 to 1,000 weight parts platinum metal and preferably from 10 to 200 weight parts platinum metal, for each 1,000,000 weight parts component (A). An addition below 1 weight part platinum metal will not provide satisfactory flame retardancy or satisfactory electrical properties as exemplified by tracking resistance. There are no additional effects due to additions in excess of 1,000 weight parts of platinum metal.

The organoperoxide (F) functions to cure the composition according to the present invention. This component can be the known organoperoxides typically employed as curing agents for silicone rubber compositions. Examples of useful organoperoxides are benzoyl peroxide, tert-butyl perbenzoate, 2,4-dichlorobenzoyl peroxide, dicumyl peroxide, and 2,5-dimethyl-2,5-di(tert-butylperoxy)hexane.

The composition according to the present invention comprises the components (A) to (F) and may also contain, insofar as the objects of the invention are not adversely affected, various additives known for application in silicone rubber compositions. Examples of such additives include nonreinforcing fillers, pigments, heat stabilizers, flame retardants, internal release agents, and plasticizers. The nonreinforcing fillers are exemplified by calcium carbonate, mica, magnesium oxide, aluminum oxide, and magnesium hydroxide. The pigments are exemplified by carbon black, iron oxide red, and titanium dioxide. The heat stabilizers are exemplified by the rare earth oxides, rare earth hydroxides, cerium silanolate, and the fatty acid salts of cerium. The flame retardants are exemplified by fumed titanium dioxide, small quantities of carbon black, manganese carbonate, and zinc carbonate.

The composition according to the present invention can be prepared simply by mixing the described quantities of above-components (A) through (F) to homogeneity. However, in a preferred method, components (A), (B), and (C) are mixed, preferably with heating, to prepare a silicone rubber base compound, into which components (D), (E), and (F) are then blended. When component (B) is a non-hydrophobicized reinforcing silica micropowder with a specific surface ≥ 50 m²/g, a plasticizer, for example, silanol-endblocked diorganosiloxane oligomer, hexaorganodisilazane and water, or hexaorganodisiloxane, is preferably admixed at from 1 to 30 weight parts per 100 weight parts of component (A). Well known mixing devices can be used to mix components (A), (B), and (C), such as a kneader mixer or twin-screw continuous compounding extruder. Components (D), (E), and (F) can also be admixed using a mixing device such as a two-roll mill or kneader mixer.

The present composition may be cured by heating to at least the decomposition temperature of the organoperoxide (F), for example, 130°C to 200°C. The present composition can be molded by those methods already well-known for molding heat-curable silicone rubbers such as compression molding and extrusion molding.

The present composition cures to give silicone rubber with high mechanical strength, excellent flame retardancy, and excellent electrical properties as typified by the tracking resistance. Therefore, the present composition can be used as an electrical insulating material in applications where such properties are critical, for example, in high-voltage or high-current applications and most prominently in outdoor applications.

The invention will be explained below using working examples, in which "parts" denotes "weight parts" and the values reported for the viscosity were measured at 25°C. The physical properties, flame retardancy, and electrical properties of cured silicone rubber compositions were measured in the examples using the following methods.

Physical properties of the silicone rubbers were measured according to the procedures given in JIS K 6301, "Physical Testing Methods for Vulcanized Rubbers". The heat-curable silicone rubber composition was compression molded at 170°C for 10 minutes to give a 2 mm-thick silicone rubber sheet. The mechanical strength values of this silicone rubber sheet were then measured according to the procedures given in JIS K 6301.

Flame retardancy was measured according to the procedures given in UL-94. The heat-curable silicone rubber composition was filled into a sheet-forming mold and compression molded at 170°C for 10 minutes to give a 1 mm-thick silicone rubber sheet. This silicone rubber sheet was cut to give a test specimen with a length of 130 mm, width of 13 mm, and thickness of 1 mm. The test specimen was suspended vertically in still air and was ignited by exposure for 10 seconds to a Bunsen burner flame (11-mm flame width, 20-mm inner flame height, 40-mm outer flame height) by just contacting the bottom edge of the test specimen with the top of the inner flame. The Bunsen burner was then withdrawn from the test specimen and the time in seconds was measured until extinction of the flame ignited on the test specimen. This flame contact test was run twice on each of 5 test specimens, and the average ( in seconds) of the 10 measurements is reported as the flame retardancy data.

To assess electrical properties an inclined plane anti-tracking test was run according to International Electrotechnical Commission (IEC) Publication 587. The test instrument was a model HAT-520 from Hitachi Kasei Kogyo Kabushiki Kaisha. The test voltage was 3.5 kV. The evaluation A referenced in the test result tables refers to the time in minutes required until the current flowing in a high-voltage circuit passing through the test specimen exceeded 60 mA. The evaluation B referenced in the test result tables refers to the time in minutes for tracking to reach a mark placed on the surface of the test specimen at a position 25 mm from the lower electrode.

Example 1. The following were introduced into a kneader mixer and mixed to homogeneity: 100 parts vinyldimethylsiloxy-endblocked dimethylsiloxanevinylmethylsiloxane copolymer gum with a degree of polymerization of 3,000 and composed of 99.87 mole% dimethylsiloxy units and 0.13 mole% vinylmethylsiloxy units; 30 weight parts fumed silica with a specific surface of 300 m²/g; 15 parts aluminum hydroxide powder with an average particle size of 1 µm; and 10 parts silanol-endblocked polydimethylsiloxane oligomer (viscosity = 30 mPa·s) as plasticizer.

This was heated for 60 minutes at 175°C to give a silicone rubber base compound. Then, 0.15 part benzotriazole and sufficient reaction mixture 1 (see below, platinum metal content = 2,500 ppm) to provide 30 ppm platinum metal were added and mixed to homogeneity on a two-roll mill into 100 parts of the base compound. A heat-curable silicone rubber composition was finally prepared by the addition, with mixing to homogeneity, of 0.8 part of a paste-like mixture of 2,5-dimethyl-2,5-di(tert-butylperoxy) hexane in 50 weight% silicone oil. Reaction mixture 1, which was obtained from 3,5-dimethyl-1-hexyn-3-ol and a platinum compound complex containing platinum-divinyltetramethyldisiloxane (platinum content = 5,000 ppm). Reaction mixture 1 was prepared by the addition of 100 parts 3,5-dimethyl-1-hexyn-3-ol to 100 parts of a platinum compound composition containing platinum-divinyltetramethyldisiloxane complex (platinum content = 5,000 ppm) that was obtained from complexing chloroplatinic acid and divinyltetramethyldisiloxane. The mixing of these two precursors was followed by shaking at room temperature and then allowing to stand overnight. The physical properties, flame retardancy, and electrical characteristics of the heat-curable silicone rubber composition as described above were measured, and the results are reported in Table 1.

For purposes of comparison, a heat-curable silicone rubber composition was prepared as above, but without the addition of the aluminum hydroxide powder (Comparative Example 1). Another heat-curable silicone rubber composition was prepared as in Example 1, but without the addition of the benzotriazole (Comparative Example 2). Another heat-curable silicone rubber composition was prepared as in Example 1, but without the addition of reaction mixture 1 (Comparative Example 3). Finally, another heat-curable silicone rubber composition was prepared as in Example 1, but without adding the benzotriazole and without adding reaction mixture 1 (Comparative Example 4). The properties of these compositions were measured as above, and these results are also reported in Table 1.

Comparative Example 5. A heat-curable silicone rubber composition was prepared as in Example 1, but in this case replacing reaction mixture 1 used in Example 1 with a complex of chloroplatinic acid and divinyltetramethyldisiloxane. This complex was added in a quantity that provided 30 ppm platinum metal. The properties of this heat-curable silicone rubber composition were then measured as in Example 1 and these results are reported in Table 2.

Example 2. A heat-curable silicone rubber composition was prepared by first mixing 0.15 part benzotriazole and sufficient reaction mixture 1 as described in Example 1 to give 100 ppm platinum metal to homogeneity into 100 parts of the silicone base compound as described in Example 1. Then 0.8 part of a 50 weight% silicone oil paste of 2,5-dimethyl-2,5-di(tert-butylperoxy)hexane was added with mixing to homogeneity on a two-roll mill. The physical and electrical properties of the silicone rubber composition obtained were measured as described in Example 1 and these results are reported in Table 3.

Example 3. The following were introduced into a kneader mixer and mixed to homogeneity: 100 parts vinyldimethylsiloxy-endblocked dimethylsiloxane-vinylmethylsiloxane copolymer gum with a degree of polymerization of 3,000 and composed of 99.87 mole% dimethylsiloxy units and 0.13 mole% vinylmethylsiloxy units; 30 weight parts fumed silica with a specific surface area of 300 m²/g; 15 parts aluminum hydroxide powder with an average particle size of 1 µm; and 10 parts of silanol-endblocked polydimethylsiloxane (viscosity = 30 mPa·s) as plasticizer. This was followed by heating for 60 minutes at 175°C to give a silicone rubber base compound.

Then, 0.15 part benzotriazole and sufficient reaction mixture 2 (see below, platinum metal content = 6,000 ppm) to provide 30 ppm platinum metal were added and mixed to homogeneity on a two-roll mill into 100 parts of the base compound. To this mixture was added 0.8 part of a paste mixture of 2,5-dimethyl-2,5-di(tert-butylperoxy)hexane in 50 weight% silicone oil with mixing to homogeneity on a two-roll mill to yield a heat-curable silicone rubber composition.

Reaction mixture 2 was obtained from the reaction of 3,5-dimethyl-1-hexyn-3-ol and chloroplatinic acid. Reaction mixture 2 was prepared by dissolving 3,5-dimethyl-1-hexyn-3-ol in an isopropanolic chloroplatinic acid solution with shaking and then allowing to stand overnight. The physical properties, flame retardancy, and electrical characteristics of the heat-curable silicone rubber composition were measured and the results are reported in Table 4.

**Table 1.**

| | Example | Comparative Examples | | | |
|---|---|---|---|---|---|
| | Example 1 | Comparative Example 1 | Comparative Example 2 | Comparative Example 3 | Comparative Example 4 |
| components | | | | | |
| base compound | 100 | 100 | 100 | 100 | 100 |
| aluminum hydroxide powder (parts) | 15 | - | 15 | 15 | 15 |
| benzotriazole (parts) | 0.15 | 0.15 | - | 0.15 | - |
| reaction mixture 1 platinum (ppm) | 30 | 30 | 30 | - | - |

| physical properties | | | | | |
|---|---|---|---|---|---|
| durometer (JIS-A) | 36 | 33 | 36 | 36 | 38 |
| tensile strength (kgf/cm²) | 83 | 99 | 85 | 83 | 76 |
| elongation (%) | 880 | 990 | 890 | 880 | 940 |
| tear strength (A) (kgf/cm) | 29 | 27 | 30 | 29 | 26 |
| flame retardancy (seconds) | 10 | 50 | 60 | entirely burned | entirely burned |

| electrical properties | | | | | |
|---|---|---|---|---|---|
| evaluation A (failure time in minutes) | ≥ 360 | ≥ 360 | 135 | 127 | 109 |
| evaluation B (time to reach 25 mm in minutes) | ≥ 360 | 150 | 87 | 95 | 98 |

**Table 2.**

| physical properties | |
|---|---|
| durometer (JIS-A) | 36 |
| tensile strength (kgf/cm²) | 80 |
| elongation (%) | 870 |
| tear strength (A) (kgf/cm) | 27 |
| flame retardancy | 150 |

| electrical properties | |
|---|---|
| evaluation A (failure time in minutes) | 146 |
| evaluation B (time in minutes to reach 25 mm) | 120 |

**Table 3.**

| physical properties | |
|---|---|
| durometer (JIS-A) | 36 |
| tensile strength (kgf/cm²) | 80 |
| elongation (%) | 870 |
| tear strength (A) (kgf/cm) | 27 |
| flame retardancy | 10 |

| electrical properties | |
|---|---|
| evaluation A (failure time in minutes) | ≥ 360 |
| evaluation B (time in minutes to reach 25 mm) | 313 |

**Table 4.**

| physical properties | |
|---|---|
| durometer (JIS-A) | 36 |
| tensile strength (kgf/cm²) | 80 |
| elongation (%) | 870 |
| tear strength (A) (kgf/cm) | 27 |
| flame retardancy | 15 |

| electrical properties | |
|---|---|
| evaluation A (failure time in minutes) | ≥ 360 |
| evaluation B (time in minutes to reach 25 mm) | 313 |

## Claims

1. A heat-curable silicone rubber composition comprising
(A) 100 weight parts polyorganosiloxane gum comprising at least 2 silicon-bonded alkenyl groups in each molecule and having average compositional formula
RₐSiO_{(4-a)/2} ,
where R denotes substituted and unsubstituted monovalent hydrocarbon groups and a is a value from 1.95 to 2.05,
(B) 10 to 100 weight parts silica micropowder,
(C) 1.0 to 50 weight parts aluminum hydroxide powder,
(D) 0.01 to 10 weight parts benzotriazole,
(E) the reaction mixture of (a) a platinum compound and
(b) 3,5-dimethyl-1-hexyn-3-ol,
where the reaction mixture is added in a quantity that provides from 1 to 1,000 weight parts platinum metal for each 1,000,000 weight parts of component (A), and
(F) 0.1 to 10 weight parts organoperoxide.

2. A heat-curable silicone rubber composition according to Claim 1, where component (a) is selected from chloroplatinic acid-divinyltetramethyldisiloxane complex or chloroplatinic acid.

3. A heat-curable silicone rubber composition according to Claim 1, where component (A) is a vinyldimethylsiloxy-endblocked dimethylsiloxane-vinylmethylsiloxane copolymer gum.

4. A heat-curable silicone rubber composition according to Claim 1, where the silica micropowder has a specific surface area equal to or greater than 50 m²/g.

5. A heat-curable silicone rubber composition according to Claim 1, where the silica micropowder is hydrophobed by treatment with an organosilicon compound.

6. A heat-curable silicone rubber composition according to Claim 1, where the aluminum hydroxide powder has a particle size in a range from 0.1 µm to 10 µm.

7. A heat-curable silicone rubber composition according to Claim 1 comprising 0.01 to 5 weight parts of the benzotriazole per 100 weight parts of the polyorganosiloxane gum.

8. A heat-curable silicone rubber composition according to Claim 1, where the weight ratio of the platinum compound to the 3,5-dimethyl-1-hexyn-3-ol is from 1:0.1 to 1:1000.

9. A heat-curable silicone rubber composition according to Claim 1, where the weight ratio of the platinum compound to the 3,5-dimethyl-1-hexyn-3-ol is from 1:1 to 1:100.

10. A heat-curable silicone rubber composition according to Claim 1, where the organoperoxide is selected from the group consisting of benzoyl peroxide, tert-butyl perbenzoate, 2,4-dichlorobenzoyl peroxide, dicumyl peroxide, and 2,5-dimethyl-2,5-di (tert-butylperoxy) hexane.

## Patentansprüche

1. Wärmehärtbare Siliconkautschukzusammensetzung die die folgenden Bestandteile umfaßt:
(A) 100 Gew.-Teile eines Polyorganosiloxangummis mit mindestens zwei siliciumgebundenen Alkenylgruppen in jedem Molekül und der durchschnittlichen Zusammensetzungsformel RₐSiO_{(4-a)/2}, worin R für substituierte oder unsubstituierte einwertige Kohlenwasserstoffgruppen steht und a einen Wert von 1,95 bis 2,05 besitzt,
(B) 10 bis 100 Gew.-Teile Siliciumdioxidmikropulver,
(C) 1,0 bis 50 Gew.-Teile Aluminiumhydroxidpulver,
(D) 0,01 bis 10 Gew.-Teile Benzotriazol,
(E) das Reaktionsgemisch aus (a) einer Platinverbindung und (b) 3,5-Dimethyl-1-hexin-3-ol,
wobei das Reaktionsgemisch in einer Menge zugesetzt wird, die 1 bis 1000 Gew.-Teile Platinmetall pro 1.000.000 Gew.-Teile Komponente (A) liefert und
(F) 0,1 bis 10 Gew.-Teile Organoperoxid.

2. Wärmehärtbare Siliconkautschukzusammensetzung nach Anspruch 1, wobei die Komponente (a) aus Chloroplatin(IV)-säure-Divinyltetramethyldisiloxan-Komplex oder Chloroplatin(IV)-säure ausgewählt ist.

3. Wärmehärtbare Siliconkautschukzusammensetzung nach Anspruch 1, wobei die Komponente (A) ein vinyldimethylsiloxyendblockierter Dimethylsiloxan-Vinylmethylsiloxan-Copolymergummi ist.

4. Wärmehärtbare Siliconkautschukzusammensetzung nach Anspruch 1, wobei das Silicium-dioxidmikropulver eine spezifische Oberfläche von ≥ 50 m²/g aufweist.

5. Wärmehärtbare Siliconkautschukzusammensetzung nach Anspruch 1, wobei das Siliciumdioxidmikropulver durch Behandlung mit einer Organosiliciumverbindung hydrophobiert worden ist.

6. Wärmehärtbare Siliconkautschukzusammensetzung nach Anspruch 1, wobei das Aluminiumhydroxidpulver eine Teilchengröße im Bereich von 0,1 µm bis 10 µm aufweist.

7. Wärmehärtbare Siliconkautschukzusammensetzung nach Anspruch 1, die 0,01 bis 5 Gew.-Teile Benzotriazol pro 100 Gew.-Teile des Polyorganosiloxangummis umfaßt.

8. Wärmehärtbare Siliconkautschukzusammensetzung nach Anspruch 1, wobei das Gew.-Verhältnis Platinverbindung/3,5-Dimethyl-1-hexin-3-ol 1/0,1 bis 1/1000 beträgt.

9. Wärmehärtbare Siliconkautschukzusammensetzung nach Anspruch 1, wobei das Gew.-Verhältnis Platinverbindung/3,5-Dimethyl-1-hexin-3-ol in einem Bereich von 1/1 bis 1/100 liegt.

10. Wärmehärtbare Siliconkautschukzusammensetzung nach Anspruch 1, wobei das Organoperoxid aus Benzoylperoxid, tert.-Butylperbenzoat, 2,4-Dichlorbenzoylperoxid, Dicumylperoxid und 2,5-Dimethyl-2,5-di(tert.-butylperoxy)hexan ausgewählt ist.

## Revendications

1. Une composition de caoutchouc de silicone thermodurcissable comprenant
(A) 100 parties en poids de gomme de polyorganosiloxane comprenant au moins 2 groupes alcényles liés au silicium dans chaque molécule et ayant la formule moyenne de composition
RₐSiO_{(4-a)/2}
où R représente des radicaux hydrocarbonés monovalents substitués et non substitué et la valeur de a est de 1,95 à 2,05,
(B) 10 à 100 parties en poids de micropoudre de silice,
(C) 1,0 à 50 parties en poids de poudre d'hydroxyde d'aluminium,
(D) 0,01 à 10 parties en poids de benzotriazole,
(E) le mélange réactionnel de
(a) un composé du platine et
(b) 3,5-diméthyl-1-hexyne-3-ol,
le mélange réactionnel étant ajouté en une quantité qui fournit 1 à 1000 parties en poids de platine métallique pour 1 000 000 parties en poids de composant (A), et
(F) 0,1 à 10 parties en poids de peroxyde organique.

2. Une composition de caoutchouc de silicone thermodurcissable selon la revendication 1, dans laquelle le composant (a) est choisi parmi un complexe acide chloroplatinique-divinyltétraméthyldisiloxane ou l'acide chloroplatinique.

3. Une composition de caoutchouc de silicone thermodurcissable selon la revendication 1, dans laquelle le composant (A) est une gomme de copolymère diméthylsiloxanevinylméthylsiloxane terminé par des motifs vinyldiméthylsiloxy.

4. Une composition de caoutchouc de silicone thermodurcissable selon la revendication 1, dans laquelle la micropoudre de silice a une surface spécifique supérieure ou égale à 50 m²/g.

5. Une composition de caoutchouc de silicone thermodurcissable selon la revendication 1, dans laquelle la micropoudre de silice est rendue hydrophobe par traitement avec un composé organosilicié.

6. Une composition de caoutchouc de silicone thermodurcissable selon la revendication 1, dans laquelle la poudre d'hydroxyde d'aluminium a une taille de particules comprise dans un intervalle de 0,1 µm à 10 µm.

7. Une composition de caoutchouc de silicone thermodurcissable selon la revendication 1, comprenant 0,01 à 5 parties en poids du benzotriazole pour 100 parties en poids de la gomme de polyorganosiloxane.

8. Une composition de caoutchouc de silicone thermodurcissable selon la revendication 1, dans laquelle le rapport en poids du composé du platine au 3,5-diméthyl-1-hexyne-3-ol est de 1:0,1 à 1:1000.

9. Une composition de caoutchouc de silicone thermodurcissable selon la revendication 1, dans laquelle le rapport en poids du composé du platine au 3,5-diméthyl-1-hexyne-3-ol est de 1:1 à 1:100.

10. Une composition de caoutchouc de silicone thermodurcissable selon la revendication 1, dans laquelle le peroxyde organique est choisi dans le groupe constitué par le peroxyde de benzoyle, le perbenzoate de tert-butyle, le peroxyde de 2,4-dichlorobenzoyle, le peroxyde de dicumyle, et le 2,5-diméthyl-2,5-di(tert-butylperoxy)hexane.
